# FASCICULE DE BREVET EUROPEEN

(11) **EP 1 070 609 B1**
(45) Date de publication et mention de la délivrance du brevet: **25.02.2004**
(21) Numéro de dépôt: 00402003.8
(22) Date de dépôt: 12.07.2000
(51) Int. Cl.: B60G 3/20, B60G 21/05, B62D 9/02

(54) **Véhicule automobile équipé d'un système de contrôle de l'angle de carrossage des roues du véhicule en virage**
Kraftfahrzeug ausgerüstet mit einem System zur Radsturzsteuerung bei Kurvenfahrten
Motor vehicle equipped with a system controlling wheel camber during cornering

(30) Priorité: 23.07.1999 FR 9909594
(43) Date de publication de la demande: 24.01.2001
(73) Titulaire: Compagnie Générale des Etablissement Michelin-Michelin & Cie, 63000 Clermont-Ferrand (FR)
(72) Inventeur: Blondelet, Michel, 63450 Le Crest (FR); Gogu, Gregore, 63170 Aubiere (FR); Piffard, Olivier, 71620 Bey (FR); Serra, Loic, 63450 Tallende (FR); Vernier, Davy, 88100 Sainte-Marguerite (FR)
(74) Mandataire: Abello, Michel

(56) Documents cités:
- DE-A- 4 135 585
- DE-C- 19 717 418
- FR-A- 1 108 823
- FR-A- 2 745 757
- GB-A- 1 213 795
- US-A- 2 071 577
- US-A- 2 689 747
- US-A- 3 729 210
- US-A- 4 487 429
- US-A- 4 515 390
- PATENT ABSTRACTS OF JAPAN vol. 010, no. 021 (M-449), 28 janvier 1986 (1986-01-28) & JP 60 179319 A (HONDA GIKEN KOGYO KK), 13 septembre 1985 (1985-09-13)

## Description

La présente invention concerne un véhicule automobile équipé d'un système de contrôle de l'angle de carrossage des roues du véhicule en virage.

Les véhicules automobiles sont généralement munis d'un système de suspension à ressorts pour minimiser la transmission des chocs et permettre des conditions de conduite confortables. Selon la qualité de la suspension, des mouvements parasites des roues sont engendrés, lors du débattement de la suspension. La position des roues par rapport à la caisse et au sol peut varier, selon les véhicules, et selon les conditions de roulage du véhicule. Pour déterminer la position des roues du véhicule, on a défini l'angle de braquage, qui est l'angle formé par les roues directrices par rapport à l'axe longitudinal du véhicule lorsque l'on tourne le volant de direction, l'angle de pincement qui est l'angle de braquage des roues en sens opposé l'une de l'autre lorsque le volant est en ligne droite et l'angle de carrossage qui est l'inclinaison des roues par rapport au sol. On prévoit généralement aussi un léger débattement longitudinal des roues du véhicule, pour ne pas altérer le confort, en cas de choc des roues dans un nid de poule par exemple.

Lorsqu'un véhicule entre dans un virage, la caisse tend à se pencher vers l'extérieur du virage sous l'effet de la force centrifuge, du fait de la présence de la suspension, ce qui engendre un roulis de la caisse. En même temps, la majeure partie du poids du véhicule est transférée sur les roues du véhicule situées du côté extérieur du virage. Si le plan de roue n'est pas correctement maintenu, cette charge additionnelle sur les roues extérieures au virage sollicite très défavorablement le pneumatique, car celui-ci est alors en contact avec le sol uniquement par une portion périphériquement externe et réduite de la bande de roulement du bandage pneumatique, ce qui conduit, en outre, à une usure prématurée du pneumatique.

En effet, les roues s'inclinent souvent vers l'extérieur du virage dans un véhicule automobile, contrairement à ce qui se passe pour une motocyclette dont les roues sont toujours inclinées vers l'intérieur du virage. On a déjà proposé, dans le brevet US n° 4 159 128, un système de suspension de véhicule équipé d'un système de contrôle de l'angle de carrossage des roues du véhicule en virage, comportant, pour chaque roue du train de suspension avant du véhicule, une paire de bras de suspension supérieur et inférieur superposés, articulés à leur extrémité extérieure à un support de roue, le bras inférieur de suspension étant articulé à son extrémité intérieure à la caisse du véhicule, alors que le bras supérieur est articulé à l'extrémité supérieure d'un levier de commande, ce levier de commande étant articulé en son centre sur la caisse et relié à son extrémité inférieure à un moyen de commande d'une biellette de direction de la roue avant du véhicule. Dans ce système, lorsque le conducteur du véhicule braque le volant de direction pour faire tourner les roues vers l'intérieur du virage, le moyen de commande de la biellette de direction provoque le basculement du levier de commande de façon à incliner la roue vers l'intérieur du virage.

Toutefois, dans un tel système, l'inclinaison des roues ne peut s'appliquer qu'à des roues directrices, et ne dépend que de l'angle de braquage des roues. Il ne peut donc prendre en compte ni la force centrifuge, ni la vitesse, ni l'accélération du véhicule.

Dans la demande de brevet français n° 2 745 757, on a proposé un ensemble formant essieu à suspension, comportant une paire de bras de suspension superposés, articulés, d'une part, au support de roue et, d'autre part, à la caisse du véhicule, un amortisseur articulé d'une part, au bras inférieur de suspension et, d'autre part, à un levier de commande qui est articulé, à son tour, à la caisse, le basculement du levier de commande étant commandé par un actionneur pour obtenir l'inclinaison sélective des roues du véhicule et de la caisse par rapport au sol.

De manière plus classique et plus simple, pour éviter une inclinaison des roues extérieures vers l'extérieur du virage, certains véhicules ont été montés avec un contre-carrossage, c'est-à-dire avec des roues pré-inclinées vers l'intérieur du véhicule, lors de la conduite en ligne droite, de façon qu'en virage, les roues extérieures au virage adoptent au pire une position verticale par rapport au sol. Toutefois, une telle disposition engendre une fatigue excessive des pneus qui roulent sur l'intérieur de la bande de roulement, en ligne droite.

On connaît par US-2 689 747 un véhicule conforme au préambule de la revendication 1. Dans le brevet US-4 487 429, le système de suspension de chaque roue repose sur un guidage en translation d'un unique bras de support qui n'est articulé à aucune de ses extrémités.

Dans le document DE-197 17 418, les extrémités intérieures des bras sont fixes par rapport au châssis et les leviers ne permettent d'incliner l'axe des roues qu'en inclinant le châssis.

L'invention a pour but d'éliminer les inconvénients précités et de proposer un véhicule automobile équipé d'un système de contrôle de l'angle de carrossage des roues du véhicule en virage, qui permette de provoquer au moins une légère inclinaison des roues du véhicule vers l'intérieur du virage, pour maintenir une bonne surface de contact entre les pneumatiques et le sol, sans pour autant agir sur le roulis de la caisse et sans être nécessairement asservi à l'angle de braquage des roues du véhicule.

A cet effet, l'invention a pour objet un véhicule automobile selon la revendication 1.

Avantageusement, pour chaque paire de bras de suspension, l'extrémité intérieure du bras de suspension supérieur est articulée sensiblement à l'extrémité libre supérieure de la bascule de renvoi, l'extrémité intérieure du bras de suspension inférieur est articulée en un point intermédiaire de la bascule de renvoi, entre ses deux extrémités inférieure et supérieure, ladite bascule étant articulée sur la caisse du véhicule sensiblement à son extrémité inférieure.

Bien entendu, les bras de suspension doivent avoir une longueur suffisante pour atteindre un plan vertical longitudinal médian du véhicule.

Avantageusement, le rapport entre la distance séparant l'extrémité inférieure du point intermédiaire de la bascule et la distance séparant les extrémités inférieure et supérieure de la bascule, est choisi supérieur à une valeur prédéterminée de façon que la force centrifuge appliquée à la caisse du véhicule provoque automatiquement, par réaction, une inclinaison de la bascule du côté intérieur du virage.

On peut prévoir que, pour un train de suspension avant, les bras de suspension sont reliés à leur extrémité extérieure au porte-moyeu par une liaison à rotule, une biellette de direction étant reliée au bras de suspension supérieur et un amortisseur reliant la caisse audit bras supérieur de suspension.

On peut également prévoir que, pour un train de suspension arrière, le bras de suspension inférieur est relié au porte-moyeu par une liaison à un seul axe d'articulation parallèle à la direction longitudinale du véhicule et un amortisseur relie le bras de suspension supérieur à la caisse.

Avantageusement, la bascule est articulée par rapport à la caisse du véhicule de telle manière qu'une rotation de la bascule par rapport à la caisse s'effectue autour d'un axe de pivotement instantané distinct de points mécaniques d'articulation.

L'axe de pivotement instantané de la bascule peut être prévu horizontal, ou bien incliné pour induire un effet de braquage.

L'axe de pivotement instantané de la bascule peut être prévu au dessus ou au dessous du niveau du sol et de préférence au dessous du niveau des points mécaniques d'articulation.

Dans une première variante, le système de contrôle précité comporte une liaison élastique à déformation limitée en torsion reliant la bascule à la caisse, au niveau de son articulation précitée, de façon que ladite liaison élastique rappelle la bascule dans un plan sensiblement vertical et longitudinal du véhicule lorsque celui-ci roule en ligne droite, et limite l'inclinaison de ladite bascule par rapport audit plan, dans un virage, l'inclinaison de la bascule en virage étant engendrée par réaction à la force centrifuge appliquée à la caisse du véhicule.

Dans une autre variante, le système de contrôle précité comporte un actionneur porté par la caisse du véhicule et relié à la bascule, ledit actionneur étant apte à commander la position angulaire de la bascule en virage, ledit actionneur pouvant être asservi à l'angle de braquage des roues, à la force centrifuge appliquée à la caisse, à la vitesse du véhicule et/ou à son accélération.

Pour mieux faire comprendre l'objet de l'invention, on va en décrire maintenant, à titre d'exemples purement illustratifs et non limitatifs, trois modes de réalisation représentés sur le dessin annexé.

Sur ce dessin :
- la figure 1 est une vue schématique, partielle et en perspective d'un train de suspension avant d'un véhicule automobile qui ne fait pas partie de l'invention revendiquée, mais qui est utile à sa compréhension ;
- la figure 2 est une vue schématique, partielle et en perspective d'un train de suspension arrière d'un véhicule qui ne fait pas partie de l'invention revendiquée, mais qui est utile à sa compréhension ;
- la figure 3 est une vue en élévation frontale du train de suspension arrière de la figure 2, dans une position de roulage en ligne droite ;
- la figure 4 est une vue analogue à la figure 3, mais dans un virage ;
- la figure 5 est une vue analogue à la figure 1, mais pour un train de suspension arrière selon un mode de réalisation du véhicule de l'invention ;
- la figure 6 est une vue schématique d'un exemple de train de suspension selon un autre mode de réalisation du véhicule selon l'invention ;
- la figure 7 est une vue schématique d'une variante de réalisation de la figure 6.

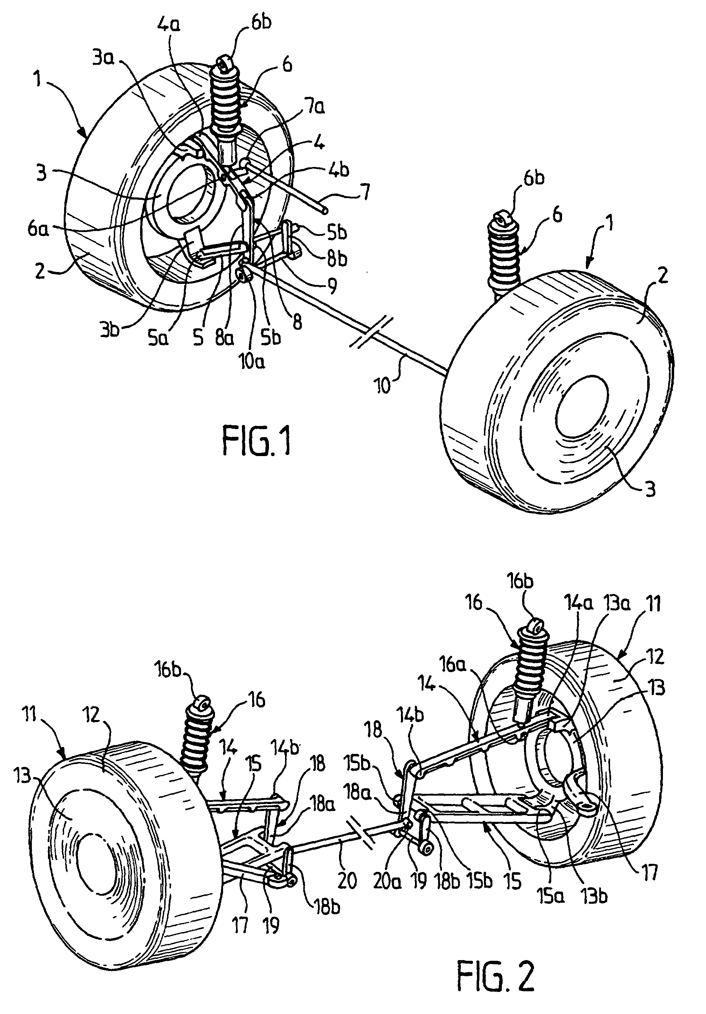

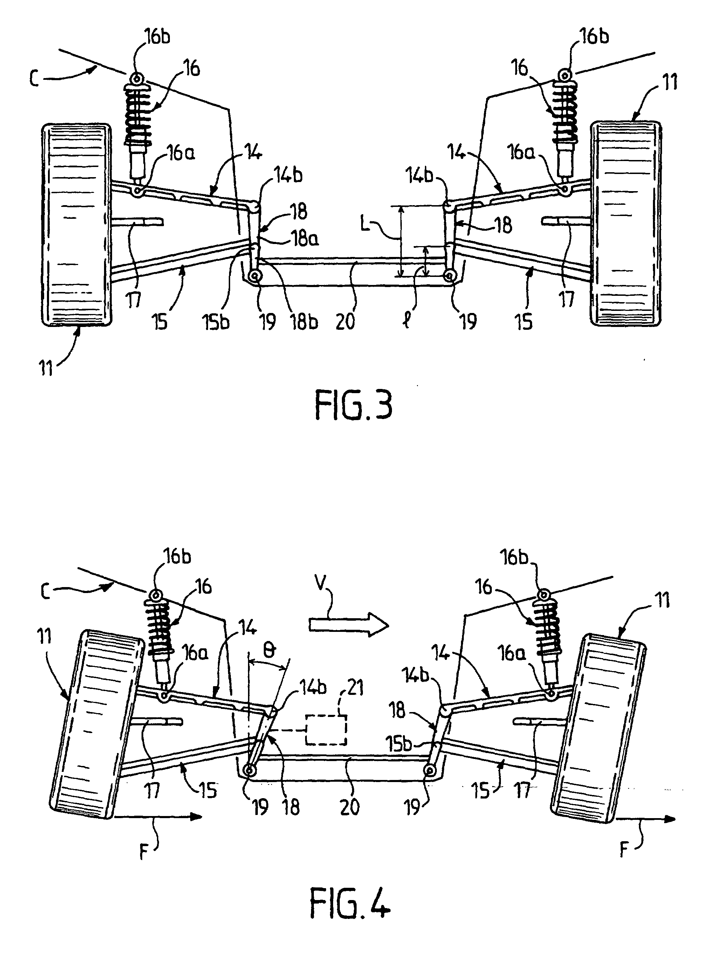

Sur la figure 1, on a représenté un train de suspension avant pour un véhicule automobile. Chaque roue avant 1 est constituée d'un bandage pneumatique 2 et d'un porte-moyeu 3 destiné à recevoir la fusée de l'essieu avant du véhicule. Le porte-moyeu 3 comporte, sur sa face intérieure, une patte supérieure 3a et une patte inférieure 3b diamétralement opposées qui sont aptes à recevoir un joint à rotule pour leur liaison à l'extrémité externe 4a, 5a d'un bras de suspension supérieur 4 et d'un bras de suspension inférieur 5 respectivement. Sur le bras de suspension supérieur 4 est articulée, sensiblement à mi-longueur, l'extrémité inférieure 6a d'un amortisseur 6, dont l'extrémité supérieure 6b est destinée à être montée, par une liaison pivotante, au châssis C du véhicule (représenté sur les figures 3 et 4). L'amortisseur 6 est constitué, de manière connue en soi, d'un cylindre et d'une tige d'amortissement associés à un ressort hélicoïdal de compression.

Une biellette de direction 7 est montée à son extrémité extérieure 7a, par une liaison à rotule, sur le porte-moyeu 3, pour commander l'angle de braquage des roues 1. La biellette 7 est reliée, par un mécanisme connu en soi, à la colonne de direction qui est commandée par le volant du véhicule.

L'extrémité intérieure 4b du bras de suspension supérieur est articulée à l'extrémité libre supérieure d'une bascule de renvoi 8 qui est articulée, à son extrémité inférieure, sur un axe d'articulation 9 s'étendant dans la direction longitudinale du véhicule sur sa caisse.

Le bras de suspension inférieur 5 se présente sous la forme d'un triangle dont le sommet constitue l'extrémité extérieure 5a montée sur le porte-moyeu 3, et dont les deux extrémités de la base du triangle sont en forme de fourche et constituent les extrémités intérieures 5b du bras de suspension inférieur, qui sont articulées en un point intermédiaire de la bascule de renvoi 8. Cette bascule de renvoi 8 est, en fait, constituée d'une première biellette 8a plus grande, sur laquelle sont articulés l'extrémité intérieure 4b du bras de suspension supérieur 4, une branche intérieure 5b du triangle de suspension inférieur 5 et l'axe d'articulation 9 précité, et d'une deuxième biellette 8b plus petite, sur laquelle sont articulés uniquement l'autre branche 5b du triangle de suspension inférieur 5 et l'axe d'articulation 9. La bascule 8, les bras 4 et 5 et le porte-moyeu 3 forment ensemble un quadrilatère articulé.

Une barre de liaison 10 s'étend dans la direction transversale du véhicule et vient relier les deux bascules de renvoi associées à la roue avant gauche et à la roue avant droite. La barre de liaison 10 est reliée à chaque bascule de renvoi 8, par l'une de ses extrémités 10a, en un point intermédiaire entre l'axe d'articulation 9 et le point d'articulation avec le bras de suspension inférieur 5. Ainsi, les deux bascules de renvoi 8 et la barre de liaison 10 forment avec le châssis un parallélogramme articulé.

Sur les figures 2 à 4, on a représenté le train de suspension arrière, pour lequel les éléments identiques ou analogues à ceux du train de suspension avant portent les mêmes chiffres de référence augmentés d'une dizaine.

Les différences principales entre le train de suspension arrière et le train de suspension avant, concernent la biellette de direction 17 qui est ici attachée, à son extrémité externe, au porte-moyeu 13 et, à son extrémité interne, à l'arrière de la caisse du véhicule, pour bloquer le braquage des roues arrière 11. Le triangle de suspension inférieur 15 et le bras de suspension supérieur 14 sont reliés au porte-moyeu 13 par des liaisons pivotantes à un seul axe d'articulation orienté dans la direction longitudinale du véhicule, comme mieux visible sur la figure 2.

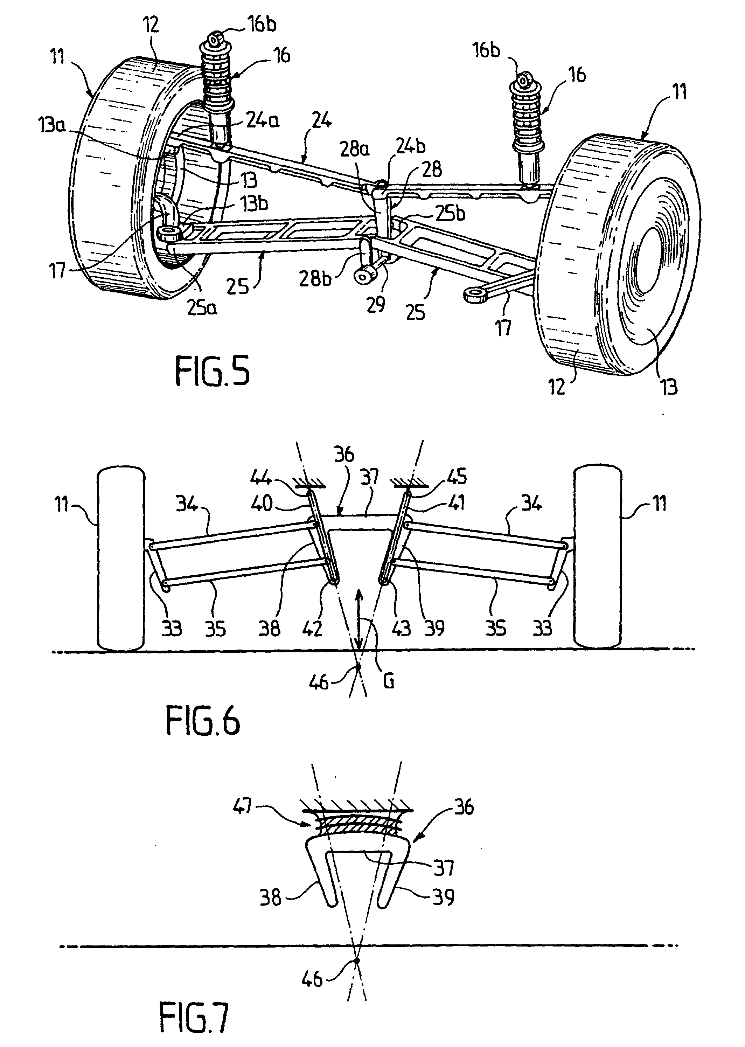

Sur la figure 5, on a représenté une variante de réalisation conforme à l'invention du train de suspension arrière, pour lequel les éléments identiques ou analogues à ceux du train de suspension avant portent les mêmes chiffres de référence augmentés d'une vingtaine.

Dans cette variante, la barre de liaison 10 a été supprimée et on prévoit une seule bascule 28 située au centre du châssis à laquelle sont reliés les bras de suspension 24, 25 de chaque roue transversalement opposée, les bras 24, 25 étant prévus plus longs à cet effet.

On va maintenant décrire le fonctionnement du véhicule en référence aux figures 3 et 4.

Dans la variante illustrée sur la figure 3, on peut prévoir que l'axe d'articulation 19 de la bascule 18 est muni d'un manchon élastique pour sa liaison à la caisse C, ledit manchon élastique étant susceptible de se déformer en torsion pour limiter le pivotement de la bascule 18 par rapport à l'axe d'articulation 19 et pour la rappeler dans sa position sensiblement verticale, en dehors des virages.

Dans ce cas, lorsque le véhicule entre dans un virage, le poids de la caisse C est transféré vers l'extérieur du virage du fait de la force centrifuge et de la compression asymétrique des amortisseurs 16. Sur la figure 4, on a indiqué par la flèche V le sens du virage dans lequel le véhicule doit tourner. Etant donné que le châssis C est entraîné vers l'extérieur du virage, l'axe d'articulation 19 de la bascule 18 se déplace vers la gauche sur la figure 4, c'est-à-dire vers l'extérieur du virage par rapport aux roues 11 du véhicule. Ceci entraîne le basculement de la bascule 18 dans le sens horaire sur la figure 4 autour de l'axe d'articulation 19, d'un angle θ sensiblement égal à 10-15°. Le basculement de la bascule 18 entraîne le déplacement à la fois du bras de suspension inférieur 15 et du bras supérieur 14, ce qui provoque une inclinaison correspondante des roues 11, du côté intérieur du virage. Bien entendu, pour obtenir automatiquement le basculement de la bascule 18 du côté intérieur du virage, en réaction à la force centrifuge appliquée au châssis C, il faut choisir les valeurs L et ℓ de façon que le rapport ℓ/L soit supérieur à une valeur prédéterminée, ℓ étant la distance entre l'axe d'articulation 19 et l'extrémité interne 15b du bras de suspension inférieur 15 et L étant la distance entre l'axe d'articulation 19 et l'extrémité interne 14b du bras de suspension supérieur 14.

Sur la figure 4, on a représenté les roues en position inclinée, dans un virage, sans pour autant représenter la caisse C dans sa position réelle inclinée vers l'extérieur du virage, sous l'effet de la force centrifuge. Dans la réalité, la légère inclinaison des roues 11 du véhicule vient au moins compenser l'inclinaison en sens inverse des roues extérieures au virage, sous l'effet de la force centrifuge, afin que la surface de contact des bandages pneumatiques 12 des roues 11 avec le sol reste suffisante. Comme indiqué par les flèches F sur la figure 4, la force d'appui des roues 11 sur le sol est orientée vers l'intérieur du virage, ce qui contribue à une bonne tenue de route, comme cela est le cas pour une motocyclette, dans laquelle les roues exercent une poussée de carrossage orientée vers l'intérieur du virage.

Dans une autre variante, on pourrait prévoir qu'une bascule 18 soit commandée en rotation par un actionneur 21 représenté en traits interrompus sur la figure 4, pour commander l'inclinaison de la bascule 18 en virage, en fonction de paramètres détectés, tels que l'angle de braquage des roues, la force centrifuge, la vitesse et/ou l'accélération du véhicule.

L'un des principes de l'invention consiste à accrocher les bras de suspension inférieur et supérieur à une bascule de renvoi intermédiaire, et non directement à la caisse.

Dans le cas du manchon élastique à déformation en torsion, on peut parler de contrôle réactif du carrossage du véhicule, alors que, dans le cas de l'actionneur 21, on peut parler de contrôle actif du carrossage.

Dans l'exemple de réalisation de la figure 5, l'axe d'articulation 29 de la bascule 28 est un axe de pivotement instantané de la bascule 28. La disposition de cet axe par rapport au sol est limitée par la garde au sol du véhicule. De ce fait, l'axe de pivotement instantané de la bascule 8 est toujours au dessus du sol.

Pour optimiser la position de l'axe de pivotement instantané en termes de performances, il est apparu judicieux de prévoir une bascule susceptible de pivoter autour d'un axe virtuel renvoyé en toute position souhaitée et notamment en dessous du niveau du sol.

Deux exemples de réalisation d'une telle bascule sont représentés schématiquement sur les figures 6 et 7.

Sur la figure 6, chaque roue 11 porte un porte-moyeu 33 sur lequel s'articulent un bras de suspension supérieur 34 et un bras de suspension inférieur 35. Une bascule 36 est prévue, en forme de U, comportant une partie centrale 37 s'étendant transversalement par rapport au véhicule et deux bras 38 et 39 s'étendant vers le bas, parallèlement au porte-moyeu 33 respectif, et convergeant vers le bas.

Chaque bras de suspension supérieur 34 est articulé d'une part à la partie supérieure du porte-moyeu 33 respectif et d'autre part à la partie supérieure du bras 38 (ou 39) de la bascule 36. Chaque bras de suspension inférieur 35 est articulé d'une part à la partie inférieure du porte-moyeu 33 respectif et d'autre part à un point intermédiaire du bras 38 (ou 39) de la bascule. Ainsi, les porte-moyeu 33 et les bras 34, 35 et 38 (ou 39) constituent des parallélogrammes déformables.

Aux extrémités inférieures 42, 43 des bras 38, 39 de la bascule 36, s'articulent des biellettes 40, 41 respectivement. Les autres extrémités 44, 45 des biellettes 40, 41 s'articulent sur la caisse du véhicule. Les biellettes 40, 41 sont disposées sensiblement parallèlement aux bras 38, 39 de la bascule 36, c'est-à-dire en convergeant vers le bas, en un point 46 qui correspond à l'axe de pivotement instantané de la bascule 36. Cet axe de pivotement instantané peut être placé au dessus ou au dessous du niveau du sol et de préférence au dessous du niveau des points mécaniques d'articulation.

Sur la figure 7, la bascule 36 a la même structure que sur la figure 6, mais la liaison avec la caisse du véhicule est obtenue par l'intermédiaire d'une liaison 47 à glissière courbe réalisée par une pièce élastique.

Le point 46 sur les figures 6 et 7 constitue une sorte de pivot virtuel, correspondant à un axe de pivotement instantané distinct de points mécaniques d'articulation.

La bascule 36 a été décrite en référence aux figures 6 et 7 dans un mode particulier de réalisation. Il faut noter que la forme de la bascule est arbitraire, et que seuls les points d'articulation des différents éléments sur la bascule sont fonctionnels. La forme de la bascule est déterminée en fonction des contraintes d'encombrement sous le véhicule et du procédé d'assemblage du moyen de suspension à la caisse du véhicule. Ainsi la bascule peut être fermée, ou ouverte, par exemple vers le haut ou vers le bas (cas de la figure 6).

L'axe virtuel de pivotement, symbolisé par le point 46 peut être horizontal ou incliné pour induire par exemple un effet de braquage lors d'un passage en courbe.

Bien que l'invention ait été décrite en liaison avec plusieurs variantes de réalisation particulières, il est bien évident qu'elle n'y est nullement limitée et qu'elle comprend tous les équivalents techniques des moyens décrits ainsi que leurs combinaisons, si celles-ci entrent dans le cadre des revendications.

## Revendications

1. Véhicule automobile équipé d'un système de contrôle de l'angle de carrossage (θ) des roues (11) du véhicule en virage, comportant, pour chaque roue d'au moins un essieu avant et/ou arrière du véhicule, un moyen de suspension constitué d'une paire de bras de suspension supérieur (24, 34) et inférieur (25, 35), articulés à leur extrémité extérieure (24a, 25a) à un porte-moyeu (33) et articulés à leur extrémité intérieure (24b, 25b) à la caisse (C) du véhicule, les bras de suspension inférieur (25, 35) et supérieur (24, 34) de chaque paire étant articulés par leur extrémité intérieure respective (24b, 25b) sur une bascule de renvoi (28, 36) qui est, à son tour, montée sur la caisse (C) par une articulation dont l'axe de rotation (29,46) est contenu dans un plan longitudinal et vertical du véhicule, **caractérisé par le fait que** les deux paires de bras de suspension (24, 25) associées respectivement aux deux roues (11) transversalement opposées du même train de suspension avant ou arrière du véhicule, sont articulées sur une même bascule de renvoi centrale (28, 36), l'axe de rotation (29, 46) de la bascule étant situé sous les articulations des bras de suspension sur la bascule, de façon que le basculement de la bascule engendre une inclinaison des roues (11) du côté approprié.

2. Véhicule selon la revendication 1, **caractérisé par le fait que**, pour chaque paire de bras de suspension, l'extrémité intérieure (24b) du bras de suspension supérieur (24, 34) est articulée sensiblement à l'extrémité libre supérieure de la bascule de renvoi (28, 36), l'extrémité intérieure (25b) du bras de suspension inférieur (25, 35) est articulée en un point intermédiaire de la bascule de renvoi, entre ses deux extrémités inférieure et supérieure, ladite bascule étant articulée sur la caisse (C) du véhicule sensiblement à son extrémité inférieure (29, 42, 43).

3. Véhicule selon la revendication 2, **caractérisé par le fait que** le rapport entre la distance (ℓ) séparant l'extrémité inférieure (29) du point intermédiaire (25b) de la bascule (28) et la distance (L) séparant les extrémités inférieure (29) et supérieure (24b) de la bascule, est choisi supérieur à une valeur prédéterminée de façon que la force centrifuge appliquée à la caisse (C) du véhicule provoque automatiquement, par réaction, une inclinaison de la bascule du côté intérieur du virage.

4. Véhicule selon l'une des revendications 1 à 3, **caractérisé par le fait que** ledit moyen de suspension comporte un ressort de suspension monté entre un bras de suspension (24, 34) et la caisse (C) du véhicule, ledit ressort étant articulé vis-à-vis dudit bras de suspension.

5. Véhicule selon l'une des revendications 1 à 4, **caractérisé par le fait que** ledit moyen de suspension comporte un ressort de suspension monté entre un bras de suspension (24, 34) et la caisse (C) du véhicule, ledit ressort étant articulé vis-à-vis de ladite caisse (C).

6. Véhicule selon l'une des revendications 4 et 5, **caractérisé par le fait que**, pour un train de suspension avant, les bras de suspension sont reliés à leur extrémité extérieure au porte-moyeu par une liaison à rotule, une biellette de direction (17) étant reliée au porte-moyeu (13) et un amortisseur (16) muni dudit ressort reliant la caisse (C) audit bras supérieur de suspension.

7. Véhicule selon l'une des revendications 4 à 6, **caractérisé par le fait que**, pour un train de suspension arrière, le bras de suspension inférieur (25, 35) est relié au porte-moyeu (13, 33) par une liaison à un seul axe d'articulation parallèle à la direction longitudinale du véhicule et un amortisseur (16) muni dudit ressort relie le bras de suspension supérieur (24) à la caisse (C).

8. Véhicule selon la revendication 1, **caractérisé par le fait que** ladite bascule (36) est articulée par rapport à la caisse (C) du véhicule de telle manière qu'une rotation de la bascule par rapport à la caisse s'effectue autour d'un axe de pivotement instantané (46) distinct de points mécaniques d'articulation.

9. Véhicule selon la revendication 8, **caractérisé par le fait que** l'axe de pivotement instantané (46) de la bascule (36) est horizontal.

10. Véhicule selon la revendication 8, **caractérisé par le fait que** l'axe de pivotement instantané (46) de la bascule (36) est incliné pour induire un effet de braquage.

11. Véhicule selon la revendication 8, **caractérisé par le fait que** l'axe de pivotement instantané (46) de la bascule (36) est situé au dessous du niveau des points mécaniques d'articulation.

12. Véhicule selon la revendication 11, **caractérisé par le fait que** l'axe de pivotement instantané (46) de la bascule (36) est situé sous le niveau du sol.

13. Véhicule selon l'une des revendications 1 à 12, **caractérisé par le fait que** le système de contrôle précité comporte une liaison élastique à déformation limitée en torsion reliant la bascule (28, 36) à la caisse (C), au niveau de son articulation précitée, de façon que ladite liaison élastique rappelle la bascule dans un plan sensiblement vertical et longitudinal du véhicule lorsque celui-ci roule en ligne droite, et limite l'inclinaison de ladite bascule par rapport audit plan, dans un virage, l'inclinaison de la bascule en virage étant engendrée par réaction à la force centrifuge appliquée à la caisse du véhicule.

14. Véhicule selon l'une des revendications 1 à 12, **caractérisé par le fait que** le système de contrôle précité comporte un actionneur (21) porté par la caisse (C) du véhicule et relié à la bascule (28, 36), ledit actionneur étant apte à commander la position angulaire de la bascule en virage, ledit actionneur pouvant être asservi à l'angle de braquage des roues, à la force centrifuge appliquée à la caisse, à la vitesse du véhicule et/ou à son accélération.

## Patentansprüche

1. Kraftfahrzeug, das mit einem System zur Steuerung des Sturzwinkels (Θ) der Räder (11) des Fahrzeugs in der Kurve ausgestattet ist, mit mindestens einer Vorder- und/oder Hinterachse des Fahrzeugs für jedes Rad, und mit einem Aufhängungsmittel, das von einem Paar aus oberem (24, 34) und unterem (25, 35) Aufhängungsarm gebildet ist, die mit ihrem äußeren Ende (24a, 25a) an einen Nabenträger (33) angelenkt sind und mit ihrem inneren Ende (24b, 25b) am Aufbau (C) des Fahrzeugs angelenkt sind, wobei der untere (25, 35) und obere (24, 34) Aufhängungsarm eines jeden Paares mit ihrem jeweiligen inneren Ende (24b, 25b) an einer Lenkwippe (28, 36) angelenkt sind, die ihrerseits am Aufbau (C) durch eine Anlenkung angebracht ist, deren Drehachse (29, 46) in einer Längs- und Vertikalebene des Fahrzeugs enthalten ist, **dadurch gekennzeichnet, daß** die beiden Paare von Aufhängungsarmen (24, 25), die jeweils zwei in Querrichtung gegenüberliegenden Rädern (11) des selben, vorderen oder hinteren Aufhängungssatzes zugeordnet sind, an ein und derselben, mittigen Lenkwippe (28, 36) angelenkt sind, wobei die Drehachse (29, 46) der Wippe unter den Anlenkungen der Aufhängungsarme an der Wippe derart gelegen ist, daß das Kippen der Wippe eine Neigung der Räder (11) zur passenden Seite erzeugt.

2. Fahrzeug nach Anspruch 1, **dadurch gekennzeichnet, daß** für jedes Paar von Aufhängungsarmen das innere Ende (24b) des oberen Aufhängungsarmes (24, 34) im wesentlichen am freien oberen Ende der Lenkwippe (28, 36) angelenkt ist, während das innere Ende (25b) des unteren Aufhängungsarmes (25, 35) an einem dazwischenliegenden Punkt der Lenkwippe angelenkt ist, wobei die genannte Wippe im wesentlichen mit ihrem unteren Ende (29, 42, 43) am Aufbau (C) angelenkt ist.

3. Fahrzeug nach Anspruch 2, **dadurch gekennzeichnet, daß** das Verhältnis zwischen dem Abstand (*l*), der das untere Ende (29) vom dazwischenliegenden Punkt (25b) der Wippe (28) trennt, und dem Abstand (L), der das untere (29) vom oberen (24b) Ende der Wippe trennt, derart größer als ein bestimmter Wert gewählt ist, daß die Fliehkraft, die auf den Aufbau (C) des Fahrzeugs aufgebracht wird, automatisch durch Reaktion eine Neigung der Wippe zur Innenseite der Kurve hervorruft.

4. Fahrzeug nach einem der Ansprüche 1 bis 3, **dadurch gekennzeichnet, daß** das genannte Aufhängungsmittel eine Aufhängungsfeder umfaßt, die zwischen einem Aufhängungsarm (24, 34) und dem Aufbau (C) des Fahrzeugs angebracht ist, wobei die genannte Feder gegenüber dem genannten Aufhängungsarm angelenkt bzw. gelenkig angebracht ist.

5. Fahrzeug nach einem der Ansprüche 1 bis 4, **dadurch gekennzeichnet, daß** das genannte Aufhängungsmittel eine Aufhängungsfeder umfaßt, die zwischen einem Aufhängungsarm (24, 34) und dem Aufbau (C) des Fahrzeugs angebracht ist, wobei die genannte Feder gegenüber dem genannten Aufbau (C) angelenkt bzw. gelenkig angebracht ist.

6. Fahrzeug nach einem der Ansprüche 4 und 5, **dadurch gekennzeichnet, daß** die Aufhängungsarme für einen vorderen Aufhängungssatz mit ihrem äußeren Ende am Nabenträger durch eine Gelenkverbindung verbunden sind, wobei eine Lenkstange (17) mit dem Nabenträger (13) verbunden ist und ein Stoßdämpfer (16), der mit der genannten Feder versehen ist, den Aufbau (C) mit dem oberen Aufhängungsarm verbindet.

7. Fahrzeug nach einem der Ansprüche 4 bis 6, **dadurch gekennzeichnet, daß** der untere Aufhängungsarm (25, 35) für einen hinteren Aufhängungssatz mit dem Nabenträger (13, 33) durch eine Verbindung mit einer einzigen, zur Fahrzeuglängsrichtung parallelen Anlenkachse verbunden ist, und daß ein mit der genannten Feder versehener Stoßdämpfer (16) den oberen Aufhängungsarm (24) mit dem Aufbau (C) verbindet.

8. Fahrzeug nach Anspruch 1, **dadurch gekennzeichnet, daß** die genannte Wippe (36) bezüglich des Aufbaus (C) des Fahrzeugs derart angelenkt ist, daß eine Drehung der Wippe bezüglich des Aufbaus rund um eine momentane Schwenkachse (46) erfolgt, die von mechanischen Anlenkungspunkten verschieden ist.

9. Fahrzeug nach Anspruch 8, **dadurch gekennzeichnet, daß** die momentane Schwenkachse (46) des Wippe (36) horizontal ist.

10. Fahrzeug nach Anspruch 8, **dadurch gekennzeichnet, daß** die momentane Schwenkachse (46) der Wippe (36) geneigt ist, um eine Lenkeinschlagswirkung zu induzieren.

11. Fahrzeug nach Anspruch 8, **dadurch gekennzeichnet, daß** die momentane Schwenkachse (46) der Wippe (36) unter dem Niveau mechanischer Anlenkungspunkte sitzt.

12. Fahrzeug nach Anspruch 11, **dadurch gekennzeichnet, daß** die momentane Schwenkachse (46) der Wippe (36) unter dem Bodenniveau sitzt.

13. Fahrzeug nach einem der Ansprüche 1 bis 12, **dadurch gekennzeichnet, daß** das vorgenannte Steuersystem eine elastische Verbindung mit begrenzter Torsionsverformung umfaßt, die die Wippe (28, 36) mit dem Aufbau (C) auf Höhe ihrer vorgenannten Anlenkung derart verbindet, daß die genannte, elastische Verbindung die Wippe im wesentlichen in einer Vertikal- und Längsebene des Fahrzeugs zurückstellt, wenn dieses geradlinig fährt, und die Neigung der genannten Wippe bezüglich der genannten Ebene in einer Kurve begrenzt, wobei die Neigung der Wippe in der Kurve durch Reaktion auf die Fliehkraft erzeugt wird, die auf den Fahrzeugaufbau aufgebracht wird.

14. Fahrzeug nach einem der Ansprüche 1 bis 12, **dadurch gekennzeichnet, daß** das vorgenannte Steuersystem ein Betätigungsglied (21) umfaßt, das vom Aufbau (C) des Fahrzeugs getragen und mit der Wippe (28, 36) verbunden ist, wobei das genannte Betätigungsglied vom Bremswinkel der Räder, der auf den Aufbau aufgebrachten Fliehkraft, der Geschwindigkeit des Fahrzeugs und/oder seiner Beschleunigung gesteuert wird.

## Claims

1. Motor vehicle fitted with a system for controlling the angle of the camber (θ) of the wheels (11) of the vehicle during cornering, comprising, for each wheel of at least one front axle and/or rear axle of the vehicle, a suspension means formed by a pair of upper (24, 34) and lower (25, 35) suspension arms, articulated at their exterior end (24a, 25a) to a hub carrier (33) and articulated at their interior end (24b, 25b) to the body (C) of the vehicle, the lower (25, 35) and upper (24, 34) suspension arms of each pair being articulated by their respective interior end (24b, 25b) on a return rocker (28, 36) which is, in turn, mounted on the body (C) by an articulation, the axis of rotation (29, 46) of which is contained in a longitudinal and vertical plane of the vehicle, **characterised in that** the two pairs of suspension arms (24, 25), associated respectively with the two transversely opposed wheels (11) of one and the same, front or rear, suspension train of the vehicle, are articulated on one and the same central return rocker (28, 36), the axis of rotation (29, 46) of the rocker being situated below the articulations of the suspension arms on the rocker, so that the tilting of the rocker causes an inclination of the wheels (11) on the appropriate side.

2. Vehicle according to claim 1, **characterised in that**, for each pair of suspension arms, the interior end (24b) of the upper suspension arm (24, 34) is articulated approximately at the upper free end of the return rocker (28, 36), the interior end (25b) of the lower suspension arm (25, 35) is articulated at an intermediate point of the return rocker, between its two lower and upper ends, said rocker being articulated on the body (C) of the vehicle approximately at its lower end (29, 42, 43).

3. Vehicle according to claim 2, **characterised in that** the ratio between the distance (ℓ) separating the lower end (29) of the intermediate point (25b) of the rocker (28) and the distance (L) separating the lower (29) and upper (24b) ends of the rocker, is chosen to be greater than a predetermined value so that the centrifugal force applied to the body (C) of the vehicle automatically causes, by reaction, an inclination of the rocker on the interior side of the bend.

4. Vehicle according to one of the claims 1 to 3, **characterised in that** said suspension means comprises a suspension spring which is mounted between a suspension arm (24, 34) and the body (C) of the vehicle, said spring being articulated relative to said suspension arm.

5. Vehicle according to one of the claims 1 to 4, **characterised in that** said suspension means comprises a suspension spring which is mounted between a suspension arm (24, 34) and the body (C) of the vehicle, said spring being articulated relative to said body (C).

6. Vehicle according to one of the claims 4 and 5, **characterised in that**, in the case of a front suspension train, the suspension arms are connected at their exterior end to the hub carrier by a ball joint connection, a steering rod (17) being connected to the hub carrier (13) and a shock absorber (16) provided with said spring connecting the body (C) to said upper suspension arm.

7. Vehicle according to one of the claims 4 to 6, **characterised in that**, in the case of a rear suspension, the lower suspension arm (25, 35) is connected to the hub carrier (13, 33) by a connection to a single axis of articulation parallel to the longitudinal direction of the vehicle, and a shock absorber (16) provided with said spring connects the upper suspension arm (24) to the body (C).

8. Vehicle according to claim 1, **characterised in that** said rocker (36) is articulated with respect to the body (C) of the vehicle in such a way that a rotation of the rocker with respect to the body is effected about an instantaneous axis of pivoting (46) separate from mechanical articulation points.

9. Vehicle according to claim 8, **characterised in that** the instantaneous axis of pivoting (46) of the rocker (36) is horizontal.

10. Vehicle according to claim 8, **characterised in that** the instantaneous axis of pivoting (46) of the rocker (36) is inclined in order to induce a steering lock effect.

11. Vehicle according to claim 8, **characterised in that** the instantaneous axis of pivoting (46) of the rocker (36) is located below the level of the mechanical articulation points.

12. Vehicle according to claim 11, **characterised in that** the instantaneous axis of pivoting (46) of the rocker (36) is located below the level of the ground.

13. Vehicle according to one of the claims 1 to 12, **characterised in that** the aforementioned control system comprises an elastic connection with limited torsional deformation, connecting the rocker (28, 36) to the body (C) at the level of its aforementioned articulation, so that said elastic connection returns the rocker to an approximately vertical and longitudinal plane of the vehicle when the latter is running in a straight line, and limits the inclination of said rocker with respect to said plane, during cornering, the inclination of the rocker during cornering being brought about by reaction to the centrifugal force applied to the vehicle body.

14. Vehicle according to one of the claims 1 to 12, **characterised in that** the aforementioned control system comprises an actuator (21) carried by the body (C) of the vehicle and connected to the rocker (28, 36), said actuator being capable of controlling the angular position of the rocker during cornering, said actuator being able to be controlled by the steering lock angle of the wheels, by the centrifugal force applied to the body, by the speed of the vehicle and/or by its acceleration.
